Europäisches Patentamt

European Patent Office

Office européen des brevets

(19)

(11) Veröffentlichungsnummer: **0 104 436**
**B1**

(12) **EUROPÄISCHE PATENTSCHRIFT**

(45) Veröffentlichungstag der Patentschrift:
**19.11.87**

(21) Anmeldenummer: **83108327.4**

(22) Anmeldetag: **24.08.83**

(51) Int. Cl.⁴: **B 32 B 27/08,** B 32 B 27/34,
B 65 D 65/40

(54) **Oberfolie für Skinpackungen.**

(30) Priorität: **30.08.82 DE 3232209**

(43) Veröffentlichungstag der Anmeldung:
**04.04.84 Patentblatt 84/14**

(45) Bekanntmachung des Hinweises auf die Patenterteilung:
**19.11.87 Patentblatt 87/47**

(84) Benannte Vertragsstaaten:
**AT BE CH DE FR GB IT LI LU NL SE**

(56) Entgegenhaltungen:
**EP - A - 0 008 891**
**EP - A - 0 065 278**
**FR - A - 2 219 003**
**FR - A - 2 377 948**

(73) Patentinhaber: **Schumacher, Rudolf, Andreasstrasse 35,
D-4060 Viersen 12 (DE)**

(72) Erfinder: **Schumacher, Rudolf, Andreasstrasse 35,
D-4060 Viersen 12 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Verbundfolie entsprechend dem Oberbegriff des Hauptanspruches.

Eine Verbundfolie entsprechend der im Oberbegriff des Hauptanspruches beschriebenen Art ist aus der EP-A-65 278 Priorität: 14.5.81; Anmeldetag: 13.5.82; Veröffentlichungstag: 24.11.82 bekannt. Die bekannte Verbundfolie ist als Schrumpffolie konzipiert und daher, wenn auch bei vergleichsweise niedrigen Temperaturen, gereckt. Die vorliegende Erfindung betrifft demgegenüber das Gebiet der Skinpackungen, auf das nachfolgend näher eingegangen wird.

Skinpackungen sind an sich bekannt. Sie bestehen aus einer durch Hitze und Vakuum eng an das Packgut angelegten Oberfolie und einer das Packgut tragenden Unterlage aus einem porösen Karton oder einer geprägten Unterfolie, so dass die Saugluft entweichen kann. Es ist auch bekannt, das Anlegen der Folie an das Packgut zusätzlich durch Druckluft zu unterstützen. Im Gegensatz zu anderen Formgebungsverfahren wird zur Herstellung von Skinpackungen kein besonderes Formwerkzeug benötigt, so dass diese Verpackungstechnik sich überall da anbietet, wo Packgut wechselnder Form vorliegt oder relativ kleine Mengen zu verpackender Ware anfallen, für die sich die Herstellung eines Formwerkzeugs, wie es z.B. für Tiefziehpackungen benötigt wird, nicht lohnt. Die Verbindung von Oberfolie und Unterlage erfolgt ohne besondere Schweisswerkzeuge, einfach durch Versiegeln der ohnehin erhitzten verschweissbaren Oberfolie mit der Unterlage.

Für Skinpackungen hat man bisher vorwiegend Monofolien aus Polyolefinen, u.a. auch aus den sogenannten Ionomerharzen, eingesetzt. Es sind auch bereits Verbundfolien aus Schichten von Ionomerharz und Äthylenvinylacetatcopolymeren für Skinpackungen bekannt geworden. Alle diese Folien erweichen in einem relativ niedrigen Temperaturbereich, sind transparent und lassen sich mit der Unterlage, auf der das Packgut liegt, gut verschweissen. Der gemeinsame Nachteil dieser Skinfolien ist jedoch ihre noch zu hohe Gasdurchlässigkeit, so dass bestimmte Einsatzgebiete der Lebensmittelverpackung bisher nicht in Frage kamen, bzw. in Kauf genommen werden musste, dass die verpackten Lebensmittel nur eine begrenzte Haltbarkeit aufwiesen. Ein weiterer Nachteil ist in der relativ geringen Festigkeit zu sehen, so dass es zu Beschädigungen der Verpackung während des Transportes der verpackten Waren kommen kann. Ein weiterer Nachteil der Verbundfolien aus Ionomerharz- und Vinylacetatcopolymerschichten ist darin zu sehen, dass diese Folien vielfach nicht stramm genug um das Packgut liegen.

Es sind auch Verbundfolien aus Polyamid und einer oder mehreren Polyäthylenschichten bekannt. Die DE-A-23 09 420 beschreibt eine solche Verbundfolie, bei der eine Polyäthylenschicht mit einer Copolyamidschicht verbunden ist. Die beschriebene Verbundfolie ist transparent, hat einen hohen Glanz, und lässt sich infolge des hohen Erweichungspunktes des verwendeten Copolyamids gut auf den üblichen Verpackungsmaschinen versiegeln. Diese Verbundfolie ist tiefziehfähig, kann aber infolge des hohen Erweichungspunktes des Copolyamids von 209 °C für Skinpackungen nicht eingesetzt werden.

Auch die in der DE-A-25 38 892 beschriebenen und zu Verbundfolien verarbeitbaren linearen Copolyamide sind zur Herstellung von für Skinpackungen geeigneten Verbundfolien kaum geeignet, weil sie ebenfalls einen relativ hohen Erweichungspunkt aufweisen, wie aus dem Merkblatt der BASF für das unter dem Handelsnamen Ultramid KR 4600 vertriebene Produkt hervorgeht, wo eine Schmelztemperatur von 196 °C angegeben ist.

Aus der DE-A-26 19 030 sind zur Verwendung bei einer Skinpackung Nylon/Polyäthylenlaminate bekanntgeworden, die aber infolge der hohen Schmelztemperatur der Nylonschicht und der geringen Transparenz keine Verbreitung gefunden haben.

Zusammengefasst sind aus dem bekannten Stand der Technik zwar einerseits für Skinpackungen geeignete Folien bekannt, jedoch weisen diese Folien noch verschiedene Nachteile auf, andererseits sind auch Folien bekannt, die diese Nachteile nicht aufweisen und beispielsweise wie die o.g. Verbundfolien über eine hohe Gasundurchlässigkeit und ausreichende Festigkeit verfügen, jedoch sind diese Folien für Skinpackungen nicht geeignet.

Ausgehend von der EP-A-65 278 liegt der vorliegenden Erfindung damit die Aufgabe zugrunde, die bekannte Verbundfolie dahingehend weiter zu entwickeln, dass sie als Oberfolie für Skinpackungen einsetzbar ist, wobei die Verbundfolie das nachfolgende Eigenschaftsbild aufweisen soll:

1. gute Verskinbarkeit bei verhältnismässig niedrigen Temperaturen, d.h. niedriger Erweichungspunkt und leichte Verformbarkeit bei relativ niedrigen Temperaturen,

2. gute mechanische Festigkeit, wie Zähelastizität, hoher Durchstosswiderstand und Abriebfestigkeit,

3. geringe Gasdurchlässigkeit,

4. gute Transparenz und hoher Oberflächenglanz,

5. ausgezeichnete Verschweissbarkeit mit der das zu verpackende Gut tragenden Unterlage, insbesondere mit Rücksicht darauf, dass beim Skinprozess keinerlei Schweisswerkzeuge angewendet werden,

6. hohe Formstabilität der verskinten Folie, d.h.: kein Spannungsabfall der verskinten Folie, so dass die Gefahr, dass sich das verpackte Gut im Laufe der Zeit innerhalb der Verpackung löst, nicht besteht. Gleichzeitig besteht die Forderung, dass das Packgut stramm umhüllt ist, wobei die Spannung der verskinten Folie auf das jeweilige Packgut abstimmbar sein muss, so dass die Gefahr einer Deformierung empfindlicher Güter nicht besteht.

Zur Lösung dieser Aufgabe sieht die Erfindung bei einer Verbundfolie entsprechend dem Gattungsbegriff des Hauptanspruches dessen kennzeichnende Merkmale vor.

Unter zumindest zu 85 Gew.% aus linearen Einheiten gebildeten Copolyamiden sind im Sinne der vorliegenden Erfindung die linearen Copolyamide zu verstehen, die aus aliphatischen Polyamidbausteinen, wie ε-Caprolactam, Hexamethylendiamin und Adipinsäure oder Laurinlactam hergestellt sind, z.B. Copolyamid 6/66 oder Copolyamid 6/12, ferner solche Copolyamide, bei denen mindestens 85 Gew.% auf ein Polykondensat aus z.B. den o.g. aliphatischen Polyamidbausteinen entfallen und höchstens 15 Gew.% auf weitere Komponenten, wie z.B. in diesem untergeordneten Mengenbereich zugegebene cycloaliphatische und aromatische Bestandteile, die in weiten Temperaturbereichen eine amorphe Struktur des Copolyamids bewirken.

Nicht zu verwechseln sind diese Copolyamide mit den teilaromatischen Polyamiden, unter denen im Sinne der Erfindung solche Polyamide zu verstehen sind, bei denen entweder die Diamin- oder die Dicarbonsäurekomponente, den aromatischen Bestandteil des Polykondensats bilden und wobei diese Komponenten in äquimolaren Anteilen vorliegen.

Im einzelnen kommen als teilaromatische Polyamide im Sinne der Erfindung in Betracht: Polykondensate aus Diaminen, wie Äthylendiamin, Hexamethylendiamin, Dekamethylendiamin, Dodekamethylendiamin, 2,2,4- und/oder 2,4,4-trimethylhexamethylendiamin, m- und/oder p-Xylylendiamin mit Dicarbonsäuren, wie Isophthalsäure und Terephthalsäure. So gesehen fallen unter die teilaromatischen Polyamide auch die teilaromatischen Copolyamide, die z.B. aus einer aliphatischen Diaminkomponente und einem Gemisch aus z.B. Terephthalsäure mit Isophthalsäure als Comonomere polykondensiert werden.

Wenn der aromatische Bestandteil in der Diaminkomponente liegt, kommen als Carbonsäurekomponenten aliphatische Dicarbonsäuren, wie Oxalsäure, Adipinsäure, Sebazinsäure u.ä. in Betracht.

Aus wirtschaftlichen Gründen kann es sich als zweckmässig erweisen, bei der Herstellung der Polyamidmischung bis zu 35 Gew.%, vorzugsweise bis zu 30 Gew.% der Gesamtmischung an Polyamid 6 zuzugeben und dadurch eine gleiche Menge der teuren Copolyamidkomponente zu ersetzen. Die Zugabe von Polyamid 66 ist dagegen nicht empfehlenswert, weil dadurch der Schmelzpunkt der Polyamidmischung zu stark heraufgesetzt wird und ausserdem wirtschaftliche Gesichtspunkte dagegen sprechen.

Zur Erzielung einer besonders hohen Gasbarriere hat sich bei der Herstellung der Polyamidmischung die Zugabe von bis zu 35 Gew.%, besonders bevorzugt bis zu 30 Gew.%, eines Äthylen-Vinylalkohol-Copolymeren (EVAL) erwiesen. Von diesen durch Verseifung des entsprechenden Äthylen-Vinylacetats hergestellten Copolymeren sind besonders bevorzugt EVAL-Typen bis zu 30 Gew.% Äthylengehalt. Bei höheren Äthylengehalten lässt die Gasbarrierewirkung dagegen deutlich nach.

Die in Ansprüchen und Beschreibung der vorliegenden Anmeldung verwendete Bezeichnung «nicht gereckt» ist so zu verstehen, dass weder die Verbundfolie noch die Polyamidschicht oder eine oder mehrere mit ihr verbundene Ionomerharzschichten einem besonderen Reckprozess oder Verstreckungsverfahren, wie sie beispielsweise zur Verfestigung von Folien in einer oder zwei Richtungen zur Verminderung der Dehnung, zur Verbesserung der Kältefestigkeit und Bedruckbarkeit oder zur Erzielung von Schrumpfwirkung durchgeführt werden, ausgesetzt waren. Geringe Reckungsgrade, wie sie unvermeidbar bei der Herstellung und Verarbeitung von Folien auftreten, werden durch die Definition «nicht gereckt» dagegen mit umfasst.

Die Eignung der erfindungsgemässen Verbundfolie für Skinpackungen erklärt sich zum einen durch die niedrige notwendige Verformungskraft bei relativ niedrigen Temperaturen. Die niedrige notwendige Verformungskraft ist in sofern überraschend, als teilaromatische Polyamide als spröde und steif galten und daher als ungeeignet für die Herstellung von Skinfolien angesehen wurden. In Verbindung mit den beschriebenen und bisher für das fragliche Gebiet ebenfalls noch nicht vorgeschlagenen Copolyamiden zeigte sich jedoch, dass lediglich geringe Verformungskräfte bei relativ niedriger Temperatur notwendig sind, um Verbundfolien, die aus einer der Erfindung entsprechend zusammengesetzten Polyamidschicht aus Copolyamiden und teilaromatischen Polyamiden und mindestens einer Polyolefinfolie bestehen, eng an das Packgut zu legen und dabei gleichzeitig alle weiteren Forderungen, die allgemein an Oberfolien für Skinpackungen gestellt werden, zu erfüllen.

Zum anderen erklärt sich die Eignung der erfindungsgemässen Verbundfolie durch die Kombination der erfindungsgemäss vorgesehenen Polyamidschicht mit mindestens einer Schicht aus einem mit Natriumionen vernetzten Ionomerharz. Ionomerharzschichten sind zwar auch bei der dem Stand der Technik zuzuzählenden EP-A-65 278 bereits vorgeschlagen worden, jedoch handelt es sich dabei entweder um Haftvermittlerschichten aus mit Zink vernetzten Ionomerharzen, bzw. um solche Typen, die über eine hohe Schrumpfkraft verfügen, d.h. bei Einwirkung von Hitze ein Verhalten zeigen, dass genau entgegengesetzt dem Verhalten liegt, wie es beim Skinprozess von einer Oberfolie verlangt wird. Durch die erfindungsgemäss vorgesehene Ausbildung der Polyolefinschicht aus einem mit Natriumionen vernetzten Ionomerharz verfügt die Verbundfolie über eine hohe Zähigkeit, ist aber trotzdem leicht verformbar und kann infolgedessen besonders gut auch für Packgut mit komplizierter Form verwendet werden.

Ein weiterer Vorteil der Erfindung liegt darin, dass die üblichen Bedingungen beim Skinverpackungsvorgang eingehalten werden können, ggf. können sogar niedrigere Temperaturen oder höhere Taktzahlen erreicht werden, wobei gleichzeitig eine hervorragende Verpackungsqualität erreicht wird, d.h., das Packgut ist stramm in die Skinfolie eingehüllt. Gleichzeitig erfüllt die Erfindung die weitere Forderung, dass auch empfindliches Packgut nicht zu straff verpackt ist, so dass eine Deformierung unterbleibt.

In geeigneter Ausführungsform weisen die erfindungsgemässen Verbundfolien zu ihrer Dehnung sehr geringe Verformungskräfte aus. Hervorragend geeignet sind erfindungsgemässe Verbundfolien, wenn sie das in der nachfolgenden Tabelle gezeigte Verhältnis von Verformungskraft und Dehnung aufweisen.

Tabelle

| Notwendige Verformungskraft: (cN) | für eine Dehnung von: (%) |
| --- | --- |
| < 50 | 5 |
| < 70 | 10 |
| <120 | 25 |
| <150 | 40 |

Ganz besonders bevorzugt sind jedoch solche Verbundfolien, die zur Erreichung einer Dehnung von 25% eine Verformungskraft von nicht mehr als 60 cN und zur Erreichung einer Dehnung von 100% eine Verformungskraft von nicht mehr als 100 cN benötigen.

Zur Messung der Verformungskraft dient die nachfolgende Messmethode:

Der zu prüfenden Folie werden in Maschinenlaufrichtung verlaufende Prüfstreifen von 15 mm Breite entnommen. Auf den Prüfstreifen werden im Abstand von 50 mm Markierungen angebracht. Aus den Prüflingen wird am unteren Ende ausserhalb der Markierungen eine Schlaufe zur Aufnahme von Gewichten geformt. Dann wird der Prüfling mit in die Schlaufe eingelegtem Gewicht in ein auf 95 °C konstant gehaltenes Wasserbad für 5 s eingetaucht. Bei der Bestimmung der Verformungskraft wird der Auftrieb der Gewichte in Wasser berücksichtigt. Anschliessend wird der Prüfling für 5 min auf einer geeigneten Unterlage flach ausgelegt und die eingetretene Längenänderung als Mass für die Dehnung festgestellt. Die in der Beschreibung angegebenen Werte der Verformungskraft werden nach dieser Messmethode ermittelt.

Wenn auch noch nicht restlos geklärt ist, worauf die ausserordentlich niedrigen notwendigen Verformungskräfte der erfindungsgemässen Folie zurückzuführen sind, so ist doch zu vermuten, dass dies unter anderem auf die niedrigen Schmelztemperaturen der Polyamidmischung zurückzuführen ist. Als geeignet zur Herstellung der erfindungsgemässen Verbundfolie haben sich solche Polyamidmischungen erwiesen, die einen Schmelzpunkt von nicht mehr als 185 °C aufweisen. Besonders geeignet sind jedoch solche Polyamidmischungen, deren Schmelzpunkt kleiner ist als 170 °C, wobei ganz besonders bevorzugt solche Polyamidmischungen sind, die einen Schmelzpunkt von nicht mehr als 160 °C aufweisen.

In einer bevorzugten Ausführungsform der Erfindung besteht die Polyamidschicht der Verbundfolie aus einer Mischung aus:

50–75 Gew.% eines zumindest zu 90 Gew.% aus linearen Einheiten gebildeten Copolyamids und

50–25 Gew.% eines teilaromatischen Polyamids.

Solche Polyamidmischungen weisen niedrige Schmelzpunkte auf und benötigen in Kombination mit einer Polyolefinfolie lediglich eine geringe Verformungskraft.

Zur Erzielung einer besonders guten Flexibilität der erfindungsgemässen Verbundfolie hat sich zur Herstellung der Polyamidschicht ein Copolyamid als besonders geeignet erwiesen, dass zumindest zu 90 Gew.% aus ε-Caprolactam, Rest: äquimolare Mengen von 3-Aminomethyl-3,5,5-trimethylcyclohexylamin und Isophthalsäure hergestellt ist.

Ein weiteres bevorzugtes Copolyamid ist ein lineares Copolyamid, das aus ε-Caprolactam, Rest: äquimolare Mengen von Hexamethylendiamin und Adipinsäure hergestellt ist. Bei der Verwendung eines solchen Copolyamids ergibt sich ein besonders niedriger Schmelzpunkt der Polyamidschicht der Verbundfolie.

Von den teilaromatischen Polyamiden sind ganz besonders bevorzugt das Polytrimethylhexamethylenterephthalamid und das Polyhexamethylenisophthalamid. Diese Polyamidtypen lassen sich in der Schmelze mit den o.g. Copolyamiden ausgezeichnet vermischen und ergeben hochflexible, hochtransparente Polyamidschichten, die eine hervorragende Verformbarkeit der erfindungsgemässen Verbundfolie bewirken.

In einer besonders bevorzugten Ausführungsform besteht die Polyamidschicht der erfindungsgemässen Verbundfolie aus einer Mischung aus:

50–75 Gew.% eines zumindest zu 90 Gew.% aus ε-Caprolactam, Rest: äquimolare Mengen von 3-Aminomethyl-3,5,5-trimethylcyclohexylamin und Isophthalsäure hergestellten Copolyamids und 50–25 Gew.% aus Polyhexamethylenisophthalamid.

Solche Polyamidschichten weisen einen niedrigen Schmelzpunkt auf und bewirken eine gute Verformbarkeit der erfindungsgemässen Verbundfolie.

In einer weiteren bevorzugten Ausführungsform besteht die Polyamidschicht aus einer Mischung aus:

55–70 Gew.% eines aus 80–90 Gew.% aus ε-Caprolactam, Rest: äquimolare Mengen von Hexamethylendiamin und Adipinsäure hergestellten linearen Copolyamids und

45–30 Gew.% Polyhexamethylenisophthalamid.

Solche Polyamidmischungen verfügen über weiter erniedrigte Schmelzpunkte und bewirken eine ausserordentlich gute Verformbarkeit der Verbundfolie.

In einer ganz besonders bevorzugten Ausführungsform besteht die Polyamidschicht der Verbundfolie aus einer Mischung aus:

50–75 Gew.% eines zu mehr als 90 Gew.% aus ε-Caprolactam, Rest: äquimolare Mengen von 3-Aminomethyl-3,5,5-trimethylcyclohexylamin und Isophthalsäure hergestellten Copolyamids und

50–25 Gew.% Polytrimethylhexamethylenterephthalamid.

Solche Polyamidmischungen weisen sehr niedrige Schmelzpunkte auf, die im Einzelfall unter 160 °C liegen können.

Eine weitere ganz besonders bevorzugte Ausführungsform der Verbundfolie sieht vor, dass die Polyamidschicht aus einer Mischung aus:

50–70 Gew.% eines aus 80–90 Gew.% aus ε-Caprolactam, Rest: äquimolare Mengen von Hexamethylendiamin und Adipinsäure hergestellten linearen Copolyamids und

50–30 Gew.% Polytrimethylhexamethylenterephthalamid hergestellt ist.

Auch solche Polyamidmischungen haben einen im Einzelfall unter 170 °C liegenden Schmelzpunkt und sind daher zur Herstellung der erfindungsgemässen Verbundfolie besonders geeignet.

Als besonders geeignet zur Herstellung der erfindungsgemässen Verbundfolie hat sich das Koextrusionsverfahren erwiesen, weil dieses Verfahren nicht nur besonders wirtschaftlich ist und zumindest einen Arbeitsgang weniger aufweist, sondern auch deswegen, weil eine durch Koextrusion hergestellte Verbundfolie über eine ausgezeichnete Isotropie der mechanischen Festigkeit, bzw. der herstellungsbedingten, inneren Spannungen verfügt.

Eine weitere Ausführungsform der Erfindung sieht vor, dass die Verbundfolie durch Laminieren einer getrennt hergestellten Polyamidschicht mit zumindest einer getrennt hergestellten Polyolefinschicht hergestellt ist. Eine solche Ausführungsform wird dann bevorzugt, wenn solche Schichten zu einer Verbundfolie vereinigt werden sollen, deren Verarbeitung durch Koextrusion nur schwierig oder überhaupt nicht möglich ist.

In einer besonders wirtschaftlichen und daher für viele Einsatzzwecke bevorzugten Ausführungsform der Erfindung besteht die Verbundfolie aus nur einer mit der Polyamidschicht verbundenen Polyolefinschicht aus einem mit Natriumionen vernetzten Ionomerharz.

Für einige Einsatzgebiete hat sich aber auch eine Ausführungsform als zweckmässig erwiesen, bei der die Verbundfolie aus einer Polyamidschicht besteht, die eingebettet ist in zwei aus mit Natriumionen vernetzten Ionomerharzschichten. Mit einer solchen Verbundfolie ist der Vorteil verbunden, dass die Polyamidschicht gegen Feuchtigkeitszutritt und damit gegen Dimensionsänderungen besonders geschützt ist. Ein weiterer Vorteil liegt darin, dass ein Anstieg der Gasdurchlässigkeit durch von aussen einwirkende Feuchtigkeit praktisch verhütet wird. Ein dreilagiger Aufbau mit einer Polyamidschicht in der Mittellage bewirkt einen weitgehenden Ausgleich einer eventuell auftretenden Rollneigung, insbesondere bei koextrudierten Folien.

Die Erfindung betrifft auch solche Verbundfolien, bei denen mehrere Polyolefinschichten aus den erfindungsgemäss vorgesehenen Ionomerharze auf einer oder beiden Seiten der Polyamidschicht angeordnet sind.

Im Rahmen der vorliegenden Erfindung können Verbundfolien hergestellt werden, bei denen die Dicke der Polyamidschicht und einer oder mehrerer Ionomerharzschichten in einem weiten Bereich variieren. Für den Bereich der Lebensmittelverpackung, in dem die erfindungsgemässe Verbundfolie ein bedeutendes Einsatzgebiet findet, haben sich Gesamtdicken von 80 bis 250 µm als besonders geeignet erwiesen. Bevorzugt liegt die Gesamtdicke bei 100 bis 180 µm. Dabei besteht die Verbundfolie bevorzugt aus einer Polyamid- und einer Ionomerharzschicht in etwa gleicher Dicke, bzw. aus einer Polyamid- und aus zwei Ionomerharzschichten von ca. je ⅓ der Gesamtdicke.

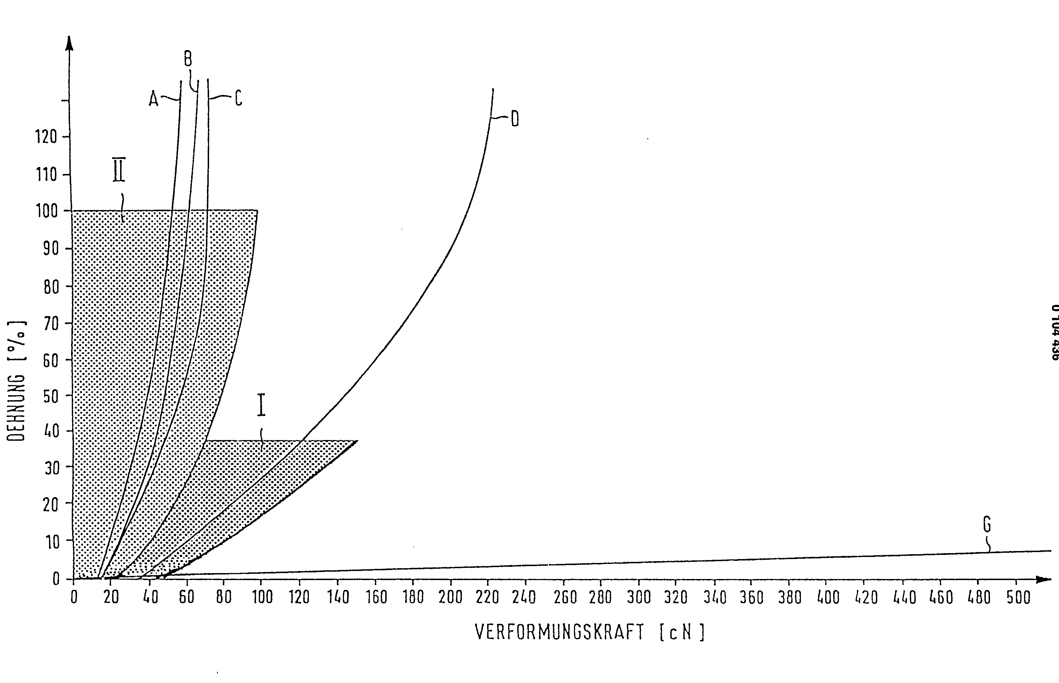

Das in der Figur gezeigte Diagramm und die nachfolgenden Beispiele 1 bis 6 dienen der weiteren Erläuterung der Erfindung, ohne die Erfindung auf die gezeigten Ausführungsformen zu beschränken.

Aus den im Diagramm mit A bis D bezeichneten Kurven sind die für erfindungsgemässe Verbundfolien notwendigen Verformungskräfte zur Erzielung der jeweiligen Dehnung erkennbar. Zum Vergleich zeigt die mit G bezeichnete Kurve das Verhalten einer nicht erfindungsgemässen Vebundfolie.

Mit I II sind verschiedene, durch unterschiedliche Schraffierung kenntlich gemachte Bereiche gekennzeichnet, durch die die Verformungskraft-/Dehnungskurven erfindungsgemässer Verbundfolien verlaufen. Von diesen Bereichen kennzeichnet der Bereich I erfindungsgemässe Verbundfolien mit einem Verformungskraft-/Dehnungsverhalten, das eine ausgezeichnete Verskinbarkeit sicherstellt. Jedoch sind Verbundfolien, deren Kurven den Bereich II durchlaufen wegen ihrer minimalen Verformungskräfte zur Erreichung hoher Dehnungswerte besonders bevorzugt.

Im einzelnen kennzeichnen die Kurven:

A: 60 µm Polyamidschicht aus:
65 Gew.% Copolyamid aus 94 Gew.% ε-Caprolactam, Rest: äquimolare Mengen von 3 Aminomethyl-3,5,5-trimethylcyclohexylamin und Isophthalsäure
35 Gew.% Polytrimethylhexamethylenterephthalamid
60 µm Polyolefinschicht aus: Ionomerharz.

B: 60 µm Polyamidschicht aus:
60 Gew.% Copolyamid 6/66
40 Gew.% Polytrimethylhexamethylenterephthalamid
Polyolefinschicht wie A.

C: 80 µm Polyamidschicht aus:
60 Gew.% Copolyamid 6/66
40 Gew.% Polyhexamethylenisophthalamid
Polyolefinschicht wie A.

D: 60 µm Polyamidschicht aus:

65 Gew.% Copolyamid aus 94 Gew.% ε-Caprolactam, Rest: äquimolare Mengen von 3 Aminomethyl-3,5,5-trimethylcyclohexylamin und Isophthalsäure

35 Gew.% Polytrimethylhexamethylenterephthalamid

Die Polyamidschicht ist beidseitig mit einer Polyolefinschicht wie unter A beschrieben versehen.

Beispiel 1:

Eine Verbundfolie wird hergestellt in folgenden Arbeitsschritten:

a) Polyamidschicht:

In einem üblichen Taumelmischer mit 50 kg Fassungsvermögen wird ein Gemenge von

50 Gew.% eines Granulats eines Copolyamids aus 94 Gew.% ε-Caprolactam, restliche Comonomere, bestehend aus äquimolaren Anteilen von 3-Aminomethyl-3,5,5-trimethylcyclohexylamin und Isophthalsäure, einem Schmelzpunkt von 214 bis 217 °C gemäss DIN 53 736 und einer Rohdichte von 1,1 g/cm$^3$ nach DIN 53 479 und

50 Gew.% eines Granulats von Polyhexamethylenisophthalamid mit einer Schmelztemperatur von 180 °C (bestimmt nach der Kofler-Methode) und einer Rohdichte von 1,19 g/cm$^3$ nach DIN 53 479

hergestellt und einer Extrusionsanlage zugeführt.

In einer üblichen Anlage für die Extrusion von Polyamid-Flachfolien, die im wesentlichen aus dem Extruder, der Flachfilmdüse, den Kühlwalzen und der Aufwickelstation besteht, wird in bekannter Weise eine Folie von 60 ± 6 µm Dicke hergestellt.

b) Polyolefinschicht:

Aus einem mit Natriumionen vernetzten Ionomerharz mit folgenden Produktdaten:

Schmelzindex von 1,3 g/10 min nach DIN 53 735, gemessen bei 190 °C und 2,16 bar, einer Rohdichte von 0,94 g/cm$^3$ wird auf einer für Polyäthylen standardmässig ausgelegten Blasfolien-Extrusionanlage Folie in einer Schichtdicke von 60 ± 4 µm hergestellt. Die Extrusionsanlage besteht im wesentlichen aus dem Extruder, einem Umlenkadapter mit Blaskopf, einem Kühlring, mit dem Kühlluft auf die Folienblase aufgebracht wird, einer Flachlegevorrichtung mit Abzugwalzen und einem Wickelaggregat. Die Arbeitsrichtung zwischen Blaskopf und Abzugwalzen ist vertikal aufwärts, die flachgelegte Schlauchbahn wird durch Abschneiden der beiden Bänder in Einzelbahnen aufgeteilt. Die Aussenseiten der beiden Folienbahnen werden einer Corona-Entladung ausgesetzt, um die Benetzbarkeit zu verbessern. Die Corona-Behandlung wird vor der Aufwickelstation vorgenommen.

c) Verbundfolie:

Die Einzelschichten gemäss a) und b) werden nach dem sogenannten Trockenkaschier-Verfahren mittels Klebstoff in bekannter Weise zu einer Verbundfolie vereinigt. Man erreicht eine Verbundfestigkeit von 125 cN/cm Folienbreite, gemessen mit einer Zugprüfmaschine nach DIN 51 221, einem Vorschub von 100 mm/min und einem Schälwinkel von 180°. Die Prüfung erfolgt nach DIN 53 455.

Die Verbundfolie wird auf einer Skinpack-Formmaschine der Type SB 53 c, hergestellt von der Firma Adolf Illig, Heilbronn, als Skinfolie (Oberfolie) eingesetzt. Dazu werden Zuschnitte hergestellt, die eine Verformfläche von 400 × 500 mm ermöglichen, wobei ein darüber hinaus stehender Rand für den Spannrahmen benötigt wird. Auf eine geeignete, eine Konturierung aufweisende Unterfolie, deren verschweissbare Schicht nach oben gerichtet ist, wird als Packgut ein flacher Plastikteller mit einem oberen Durchmesser von 100 mm, einer Wanddicke von 1 mm, einer Randhöhe von 10 mm und einem unteren Durchmesser der Auflagefläche von 80 mm aufgelegt. Ein Zuschnitt der Verbundfolie wird mit der Ionomerharzseite nach unten, in den Rahmen eingespannt, mit dem Infrarot-Strahler mit einer Heizleistung von 16,2 MJ (entsprechend 4,5 KW) in einem Abstand von Strahler zu Folienfläche von 250 mm während 8 s erwärmt. Der Folienrahmen wird danach mit der erwärmten Folie durch Absenken über den Teller gezogen, wobei das eingeschaltete Vakuum durch Absaugen der Luft zwischen Ober- und Unter-Folie die Oberfolie eng an den Teller anlegt, d.h., das Innenteil des Tellers wird trommelfellartig überspannt, während die Folie an den Hinterschneidungen unter dem Tellerrand diesen um 4 mm umspannt. Zwischen Oberkante und Unterkante bleiben 5 mm frei.

Es hat sich eine hochtransparente, glänzende und stramme Haut über dem Teller gebildet, die auch nach sechs Wochen keinerlei Einbusse ihrer Spannung zeigt. Die übrige Folienfläche der Oberfolie ist mit der Unterfolie eine feste Verbindung infolge Versiegelung durch Wärme eingegangen.

Beispiel 2:

Eine Verbundfolie mit einer 80 µm dicken Polyamidschicht und einer 60 µm dicken Polyolefinschicht aus einem Ionomerharz wird hergestellt nach den in Beispiel 1 beschriebenen Verfahrensschritten.

Die Polyamidschicht setzt sich zusammen aus:

60 Gew.% eines Granulats aus einem linearen Copolyamid, hergestellt aus 15 Gew.% Hexamethylendiamin und Adipinsäure und 85 Gew.% ε-Caprolactam, bezeichnet als Polyamid 6/66. Der Schmelzpunkt dieses Copolyamids beträgt 192 bis 202 °C, bestimmt nach der Kofler-Methode, die Rohdichte nach DIN 53 479 beträgt 1,14 g/cm$^3$, die relative Lösungsviskosität nach DIN 53 727 beträgt 3,9 bis 4,0.

40 Gew.% eines Granulats aus Polyhexamethylenisophthalamid, wie in Beispiel 1 beschrieben.

Die Polyolefinschicht wird der gleichen Fertigung entnommen, aus der auch die in Beispiel 1 beschriebene Schicht aus Ionomerharz stammt.

Die Verbundfolie wird wie in Beispiel 1 verarbeitet.

Das Ergebnis ist insofern besser als bei Beispiel 1, als hier der Tellerrand noch mehr, nämlich mit 6 mm umspannt wird, während nur 4 mm zwischen Oberkante und Unterkante frei bleiben, d.h.: Die Hinterschneidung ist infolge besserer Verformbarkeit der Verbundfolie weitgehender umhüllt worden. Die Transparenz entspricht der Verbundfolie von Beispiel 1, die Umhüllung ist stramm, aber etwas flexibler, die Spannung lässt während sechs Wochen nicht nach, die Versiegelung der Folienflächen ist optimal wie in Beispiel 1. Der Kurvenzug C des Diagramms basiert auf dem Verformungskraft-/Dehnungsverhalten der in diesem Beispiel beschriebenen Verbundfolie.

Beispiel 3:

Eine Verbundfolie mit einer 60 µm dicken Polyamidschicht und einer 60 µm dicken Polyolefinschicht wird nach der in Beispiel 1 beschriebenen Verfahrensweise hergestellt.

Die Polyamidschicht besteht aus:
65 Gew.% des in Beispiel 1 beschriebenen Copolyamids,
35 Gew.% eines Granulats aus Polytrimethylhexamethylenterephthalamid, mit einem Schmelzpunkt von 230 °C, einer Dichte nach DIN 53 479 von 1,12 g/cm$^3$ und einem E-Modul gemäss Zugversuch nach DIN 53 457 von 3000 N/mm$^2$.

Die Polyolefinschicht entspricht der in Beispiel 1 beschriebenen.

Die Verbundfolie wird wie in Beispielen 1 und 2 beschrieben verarbeitet. Als Ergebnis wird eine Umhüllung festgestellt, die in allen Eigenschaften derjenigen in Beispiel 2 entspricht.

Weiterhin wird die in diesem Beispiel beschriebene Verbundfolie auf der gleichen Verpackungsmaschine zur Umhüllung eines Lebensmittels verarbeitet. Ein Stück durchwachsener Speck von den ungefähren Abmessungen:

Länge 23 cm, Breite 12 cm, Höhe 6,5 cm wird auf eine für Lebensmittelverpackungen besonders geeignete Unterfolie gelegt und unter den genannten Bedingungen verskint. Man erhält eine optisch ansprechende Packung, die durch den hohen Oberflächenglanz der Folie und die klar-transparente, eng anliegende Umhüllung den Inhalt sehr gut erkennen lässt. Die Umhüllung ist straff und schützt den Inhalt infolge der niedrigen Gasdurchlässigkeit der Verbundfolie vor Ranzigwerden und Verderb durch sauerstoffbenötigende Mikroorganismen.

Der Kurvenzug A des Diagramms basiert auf dem Verformungskraft-/Dehnungsverhalten der in diesem Beispiel beschriebenen Verbundfolie. Die Lage des Kurvenzugs lässt eine ausgezeichnete Verformbarkeit erkennen, die mit der Verarbeitbarkeit in völliger Übereinstimmung steht.

Beispiel 4:

Die in Beispiel 3 beschriebene Verbundfolie wird in einem weiteren Arbeitsschritt in eine 3-Schicht-Verbundfolie überführt. Dabei entsteht der Schichtaufbau:

Polyolefinschicht, 60 µm dick
Polyamidschicht, 60 µm dick
Polyolefinschicht, 60 µm dick.

Die Gesamtdicke beträgt 180 bis 190 µm, wobei auch zwei Klebstoffschichten von je ca. 2 µm an der Gesamtschicht teilhaben.

Zur Herstellung dieser 3-Schicht-Verbundfolie wird in üblicher Weise auf die Polyamidschicht der im vorhergehenden Beispiel beschriebenen 2-Schicht-Verbundfolie Klebstoff aufgebracht und darauf die weitere Polyolefinschicht aufgebracht, die der in Beispiel 1 beschriebenen Ionomerharz-Folie von 60 µm Dicke entspricht. Nach Aushärtung während 10 Tagen wird diese 3-Schicht-Verbundfolie für die Skinverarbeitung auf Maschinenbreite von 440 µm geschnitten und wie in Beispiel 1 beschrieben verarbeitet, wobei jedoch eine Aufheizzeit von 9 s eingehalten wurde.

Verpackungsergebnis:

Der Tellerrand ist um 5 mm umspannt, die Oberfläche ist nicht so glatt gespannt wie in den vorhergehenden Beispielen und die Oberfläche hat nicht den hohen Glanz der bisher beschriebenen Folien. Während sechs Wochen wird keine Veränderung beobachtet. Der Kurvenzug D des Diagramms basiert auf dem Verformungskraft-/Dehnungsverhalten der in diesem Beispiel beschriebenen Verbundfolie. Die Lage des Kurvenzugs lässt erkennen, dass die notwendigen Verformungskräfte noch genügend gering sind, aber deutlich höher ausfallen als in den Kurvenzügen A und C. Der Bezug der Messreihe zum Praxisverhalten der Folie in diesem Beispiel ist offensichtlich.

Beispiel 5:

Eine Verbundfolie mit einer 60 µm dicken Polyamidschicht und einer 60 µm dicken Polyolefinschicht wird gemäss Beispiel 1 hergestellt.

Die Polyamidschicht besteht aus:
45 Gew.% eines Granulats aus dem in Beispiel 1 beschriebenen Copolyamid.
20 Gew.% eines Granulats aus Polyamid 6. Das Produkt hat eine Rohdichte gemäss DIN 53 479 von 1,13 g/cm$^3$ und eine relative Lösungsviskosität nach DIN 53 727 von 4,0.
35 Gew.% eines Granulats aus Polyhexamethylenisophthalamid, wie in Beispiel 1 beschrieben.

Die Polyolefinschicht entspricht der in Beispiel 1 verwendeten Ionomerharzschicht.

Die aus den beiden Schichten hergestellte Verbundfolie wird in der vorbeschriebenen Weise auf einer Skinpackanlage verarbeitet. Der Tellerrand ist mit 4 mm umspannt, die Folie ist relativ steif, der Teller ist straff umspannt, die Folie ist glatt und hochtransparent. Keine Veränderung nach sechswöchiger Lagerung.

Beispiel 6:

Mit einer Koextrusions-Blasfolienanlage wird eine Verbundfolie aus einer 30 Gew.% eines Äthylen-Vinylalkoholcopolymeren enthaltenden Polyamidmischung und einer Ionomerharzschicht her-

gestellt. Das Ionomerharz wird dabei in einem Extruder aufgeschmolzen und dem Mehrschicht-Blaskopf zugeführt.

Die Mischung zur Herstellung der Polyamid-/Äthylenvinylalkoholschicht besteht aus:

50 Gew.% eines linearen Copolyamids auf Basis PA 6/12 mit Anteilen an monomerem ε-Caprolactam.

30 Gew.% eines Äthylen-Vinylalkoholcopolymeren mit einem Schmelzindex von 1,6 g/10 min, einer Dichte von 1,19 g/cm$^3$ und einem Äthylengehalt von 24 Gew.%.

20 Gew.% eines Copolyamids aus 94 Gew.% ε-Caprolactam, Rest: äquimolaren Mengen von 3 Aminomethyl-3,5,5-trimethylcyclohexylamin und Isophthalsäure.

Die aus der Mischung der beiden Polyamide und EVAL hergestellte Schicht hat eine Dicke von 80 μm, die aus einem mit den Ionen des Natriums vernetzten Ionomerharz bestehende Schicht weist eine Dicke von 120 μm auf.

Die Verbundfolie weist eine gute Verskinbarkeit, verbunden mit einer erhöhten Gasdichtigkeit auf.

Vergleichsbeispiel:

Eine für Tiefziehzwecke verwendete handelsübliche Verbundfolie, bestehend aus einer Schicht von 60 μm Polyamid 6 und 60 μm Äthylen-Vinylacetatcopolymer mit einem Vinylacetatgehalt von 8 Gew.% wird nach der oben beschriebenen Messmethode zur Ermittlung der Verformbarkeit geprüft.

Man erhält einen Kurvenlauf entsprechend dem Kurvenzug G des Diagramms, der erkennen lässt, dass eine solche Folie für den Verskinungsprozess nicht geeignet ist.

**Patentansprüche**

1. Verbundfolie, bestehend aus einer Polyamidschicht, die aus einer Mischung aus:

a) maximal 85 Gew.% eines zumindest zu 85 Gew.% aus linearen Einheiten und bis zu 15 Gew.% aus weiteren Komponenten gebildeten Copolyamids und

b) mindestens 15 Gew.% eines teilaromatischen Polyamids,

bei dem entweder die Diamin- oder die Dicarbonsäurekomponente den aromatischen Bestandteil des teilaromatischen Polyamids bilden und wobei diese Komponenten in äquimolaren Anteilen vorliegen, besteht, und mindestens einer Polyolefinschicht, gekennzeichnet durch die nachfolgende Merkmalskombination:

1. das Copolyamid liegt zumindest zu 40 Gew.%, das teilaromatische Polyamid bis 60 Gew.% in der Mischung vor, wobei die Anteile des Copolyamids bis zu 35 Gew.% der Mischung durch Polyamid 6 und/oder ein Copolymerisat auf Basis Äthylen-Vinylalkohol ersetzt sein können und sich alle Gewichtsanteile der Mischung auf 100 Gew.% ergänzen,

2. die Polyolefinschicht besteht aus einem mit Natriumionen vernetzten Ionomerharz,

3. die Verbundfolie ist nicht gereckt.

2. Verbundfolie nach Anspruch 1, dadurch gekennzeichnet, dass die Polyamidschicht aus einer Mischung aus:

50–75 Gew.% eines zumindest zu 90 Gew.% aus linearen Einheiten gebildeten Copolyamids und 50–25 Gew.% eines teilaromatischen Polyamids hergestellt ist.

3. Verbundfolie nach einem der Ansprüche 1 und 2, dadurch gekennzeichnet, dass das Copolyamid zumindest zu 90 Gew.% aus ε-Caprolactam, Rest: äquimolare Mengen von 3 Aminomethyl-3,5,5-trimethylcyclohexylamin und Isophthalsäure hergestellt ist.

4. Verbundfolie nach einem der Ansprüche 1 und 2, dadurch gekennzeichnet, dass das Copolyamid linear ist und zu 80–90 Gew.% aus ε-Caprolactam, Rest: äquimolare Mengen von Hexamethylendiamin und Adipinsäure hergestellt ist.

5. Verbundfolie nach einem der Ansprüche 1 und 2, dadurch gekennzeichnet, dass das teilaromatische Polyamid Polytrimethylhexamethylenterephthalamid ist.

6. Verbundfolie nach einem der Ansprüche 1 und 2, dadurch gekennzeichnet, dass das teilaromatische Polyamid Polyhexamethylenisophthalamid ist.

7. Verbundfolie nach einem der Ansprüche 1 und 2, dadurch gekennzeichnet, dass die Polyamidschicht aus einer Mischung aus:

50–75 Gew.% eines zumindest zu 90 Gew.% aus ε-Caprolactam, Rest: äquimolare Mengen von 3 Aminomethyl-3,5,5-trimethylcyclohexylamin und Isophthalsäure hergestellten Copolyamids und 50–25 Gew.% aus Polyhexamethylenisophthalamid hergestellt ist.

8. Verbundfolie nach einem der Ansprüche 1 und 2, dadurch gekennzeichnet, dass die Polyamidschicht aus einer Mischung aus:

55–70 Gew.% eines zu 80–90 Gew.% aus ε-Caprolactam, Rest: äquimolare Mengen von Hexamethylendiamin und Adipinsäure hergestellten linearen Copolyamids und 45–30 Gew.% Polyhexamethylenisophthalamid hergestellt ist.

9. Verbundfolie nach einem der Ansprüche 1 und 2, dadurch gekennzeichnet, dass die Polyamidschicht aus einer Mischung aus:

50–75 Gew.% eines zu mehr als 90 Gew.% aus ε-Caprolactam, Rest: äquimolare Mengen von 3 Aminomethyl-3,5,5-trimethylcyclohexylamin und Isophthalsäure hergestellten Copolyamids und 50–25 Gew.% Polytrimethylhexamethylenterephthalamid hergestellt ist.

10. Verbundfolie nach einem der Ansprüche 1 und 2, dadurch gekennzeichnet, dass die Polyamidschicht aus einer Mischung aus:

50–70 Gew.% eines zu 80–90 Gew.% aus ε-Caprolactam, Rest: äquimolare Mengen von Hexamethylendiamin und Adipinsäure hergestellten linearen Copolyamids und 50–30 Gew.% Polytrimethylhexamethylenterephthalamid hergestellt ist.

11. Verbundfolie nach einem der Ansprüche 1 bis 10, dadurch gekennzeichnet, dass die Polyamidschicht mit zumindest einer mit Natriumionen

vernetzten Ionomerharzschicht durch Koextrusion verbunden ist.

12. Verbundfolie nach einem der Ansprüche 1 bis 10, dadurch gekennzeichnet, dass die Verbundfolie durch Laminieren einer getrennt hergestellten Polyamidschicht mit zumindest einer getrennt hergestellten Schicht aus einem mit Natriumionen vernetzten Ionomerharz hergestellt ist.

13. Verwendung der Verbundfolie nach einem der Ansprüche 1 bis 12 als Oberfolie einer Skinverpackung.

**Claims**

1. Composite film, comprising a polyamide layer that comprises a mixture of:

a) a maximum of 85% by weight of a copolyamide at least 85% by weight of which comprises linear units and up to 15% by weight of which comprises other components and

b) at least 15% by weight of a partially aromatic polyamide,

either the diamine component or the dicarboxylic acid component forming the aromatic constituent of the partially aromatic polyamide and those components being present in equimolar amounts, and at least one polyolefin layer, characterised by the following combination of features:

1. the copolyamide is present in the mixture at least to the extent of 40% by weight and the partially aromatic polyamide is present in the mixture to the extent of up to 60% by weight, it being possible for the amounts of the copolyamide to be replaced to the extent of up to 35% by weight of the mixture by polyamide 6 and/or a copolymer based on ethylene/vinyl alcohol and all the amounts by weight of the mixture making up 100% by weight,

2. the polyolefin layer comprises an ionomer resin crosslinked with sodium ions,

3. the composite film is not stretched.

2. Composite film according to claim 1, characterised in that the polyamide layer is produced from a mixture of:
from 50 to 75% by weight of a copolyamide at least 90% by weight of which comprises linear units, and from 50 to 25% by weight of a partially aromatic polyamide.

3. Composite film according to either of claims 1 and 2, characterised in that at least 90% by weight of the copolyamide is produced from ε-caprolactam, remainder: equimolar amounts of 3-aminomethyl-3,5,5-trimethylcyclohexylamine and isophthalic acid.

4. Composite film according to either of claims 1 and 2, characterised in that the copolyamide is linear and from 80 to 90% by weight thereof is produced from ε-caprolactam, remainder: equimolar amounts of hexamethylenediamine and adipic acid.

5. Composite film according to either of claims 1 and 2, characterised in that the partially aromatic polyamide is polytrimethylhexamethyleneterephthalamide.

6. Composite film according to either of claims 1 and 2, characterised in that the partially aromatic polyamide is polyhexamethyleneisophthalamide.

7. Composite film according to either of claims 1 and 2, characterised in that the polyamide layer is produced from a mixture of:
from 50 to 75% by weight of a copolyamide at least 90% by weight of which is produced from ε-caprolactam, remainder: equimolar amounts of 3-aminomethyl-3,5,5-trimethylcyclohexylamine and isophthalic acid and from 50 to 25% by weight of polyhexamethyleneisophthalamide.

8. Composite film according to either of claims 1 and 2, characterised in that the polyamide layer is produced from a mixture of:
from 55 to 70% by weight of a linear copolyamide from 80 to 90% by weight of which is produced from ε-caprolactam, remainder: equimolar amounts of hexamethylenediamine and adipic acid and from 45 to 30% by weight of polyhexamethyleneisophthalamide.

9. Composite film according to either of claims 1 and 2, characterised in that the polyamide layer is produced from a mixture of:
from 50 to 75% by weight of a copolyamide more than 90% by weight of which is produced from ε-caprolactam, remainder: equimolar amounts of 3-aminomethyl-3,5,5-trimethylcyclohexylamine and isophthalic acid and from 50 to 25% by weight of polytrimethylhexamethyleneterephthalamide.

10. Composite film according to either of claims 1 and 2, characterised in that the polyamide layer is produced from a mixture of:
from 50 to 70% by weight of a linear copolyamide from 80 to 90% by weight of which is produced from ε-caprolactam, remainder: equimolar amounts of hexamethylenediamine and adipic acid and from 50 to 30% by weight of polytrimethylhexamethyleneterephthalamide.

11. Composite film according to any one of claims 1 to 10, characterised in that the polyamide layer is bonded by coextrusion to at least one ionomer resin layer crosslinked with sodium ions.

12. Composite film according to any one of claims 1 to 10, characterised in that the composite film is produced by laminating a separately produced polyamide layer to at least one separately produced layer of an ionomer resin crosslinked with sodium ions.

13. Use of the composite film according to any one of claims 1 to 12 as the top film for skin packaging.

**Revendications**

1. Feuille composite, constituée d'une couche de polyamide, qui est constituée d'un mélange

a) d'au plus 85% en poids d'un copolyamide constitué pour au moins 85% en poids de motifs linéaires et pour jusqu'à 15% en poids d'autres constituants, et

b) d'au moins 15% en poids d'un polyamide partiellement aromatique,
dans lequel ou bien le composant diamine ou bien le composant acide dicarboxylique forme le constituant aromatique du polyamide partiellement aromatique et ces composants sont présents en des quantités équimolaires, et d'au moins une couche de polyoléfine, caractérisée par la combinaison de caractéristiques suivante:

1. le copolyamide est présent dans le mélange à au moins 40% en poids, et le polyamide partiellement aromatique jusqu'à 60% en poids, la partie copolyamide pouvant être remplacée, jusqu'à 35% du mélange, par du polyamide 6 et/ou un copolymère à base d'éthylène et d'alcool vinylique, la somme des pourcentages en poids du mélange étant égale à 100% en poids,

2. la couche de polyoléfine est constituée d'une résine ionomère réticulée avec des ions sodium,

3. la feuille composite n'est pas étirée.

2. Feuille composite selon la revendication 1, caractérisée en ce que la couche de polyamide est préparée à partir d'un mélange constitué de 50–75% en poids d'un copolyamide comportant au moins 90% en poids de motifs linéaires et de 50–25% en poids d'un polyamide partiellement aromatique.

3. Feuille composite selon l'une des revendications 1 ou 2, caractérisée en ce que le copolyamide est préparé, pour au moins 90% en poids, à partir d'ε-caprolactame, le reste étant des quantités équimolaires de 3-aminométhyl-3,5,5-triméthylcyclohexylamine et d'acide isophtalique.

4. Feuille composite selon l'une des revendications 1 ou 2, caractérisée en ce que le copolyamide est linéaire et est préparé pour 80–90% en poids à partir d'ε-caprolactame, le reste étant constitué de quantités équimolaires d'hexaméthylènediamine et d'acide adipique.

5. Feuille composite selon l'une des revendications 1 ou 2, caractérisée en ce que le polyamide partiellement aromatique est un poly(triméthylhexaméthylène-téréphtalamide).

6. Feuille composite selon l'une des revendications 1 ou 2, caractérisée en ce que le polyamide partiellement aromatique est le poly(hexaméthylène-isophtalamide).

7. Feuille composite selon l'une des revendications 1 ou 2, caractérisée en ce que la couche de polyamide est préparée à partir d'un mélange constitué de 50–75% en poids d'un copolyamide préparé pour au moins 90% en poids à partir d'ε-caprolactame, le reste étant constitué de quantités équimolaires de 3-aminométhyl-3,5,5-triméthylcyclohexylamine et d'acide isophtalique, et de 50–25% en poids de poly(hexaméthylène-isophtalamide).

8. Feuille composite selon l'une des revendications 1 ou 2, caractérisée en ce que la couche de polyamide est préparée à partir d'un mélange de 55–70% en poids d'un copolyamide linéaire préparé pour 80–90% en poids à partir d'ε-caprolactame, le reste étant constitué de quantités équimolaires d'hexaméthylènediamine et d'acide adipique, et de 45–30% en poids de poly(hexaméthylène-isophtalamide).

9. Feuille composite selon l'une des revendications 1 ou 2, caractérisée en ce que la couche de polyamide est préparée à partir d'un mélange constitué de 50–75% en poids d'un copolyamide préparé, pour plus de 90% en poids, à partir d'ε-caprolactame, le reste étant constitué de quantités équimolaires de 3-aminométhyl-3,5,5-triméthylcyclohexylamine et d'acide isophtalique, et de 50–25% en poids de poly(triméthylhexaméthylène-téréphtalamide).

10. Feuille composite selon l'une des revendications 1 ou 2, caractérisée en ce que la couche de polyamide est préparée à partir d'un mélange de 50–70% en poids d'un copolyamide linéaire préparé pour 80–90% en poids à partir d'ε-caprolactame, le reste étant constitué de quantités équimolaires d'hexaméthylènediamine et d'acide adipique, et de 50–30% en poids de poly(triméthylhexaméthylène-téréphtalamide).

11. Feuille composite selon l'une des revendications 1 à 10, caractérisée en ce que la couche de polyamide est liée par coextrusion avec au moins une couche de résine ionomère réticulée à l'aide d'ions sodium.

12. Feuille composite selon l'une des revendications 1 à 10, caractérisée en ce que la feuille composite est préparée par stratification d'une couche de polyamide, préparée séparément, avec au moins une couche, préparée séparément, d'une résine ionomère réticulée à l'aide d'ions sodium.

13. Utilisation de la feuille composite selon l'une des revendications 1 à 12, comme feuille de recouvrement d'un emballage sous film.

0 104 436